# EUROPEAN PATENT APPLICATION

(11) **EP 4 803 438 A1**
(43) Date of publication of application: **09.09.2026**
(21) Application number: 24885318.6
(22) Date of filing: 24.09.2024
(51) Int. Cl.: B65D 65/46, B65D 30/02, B65D 65/02, C08J 5/18, C08L 5/00, C09D 7/63, C09D 105/00

(54) **POUCH**

(30) Priority: 30.10.2023 JP 2023185648
(71) Applicant: Kuraray Co., Ltd., Kurashiki-shi, Okayama 710-0801 (JP)
(72) Inventor: HODAMA, Aoi, Kurashiki-shi, Okayama 710-0801 (JP); SATO, Tomohiko, Kurashiki-shi, Okayama 710-0801 (JP); SAWATANI, Hirotaka, Kurashiki-shi, Okayama 710-0801 (JP); BABA, Masahiro, Kurashiki-shi, Okayama 710-0801 (JP)
(74) Representative: Müller-Boré & Partner Patentanwälte PartG mbB
(86) International application number: PCT/JP2024/034009
(87) International publication number: WO 2025/094541

(57) **Abstract**

The present invention relates to a pouch comprising a water-soluble film comprising at least one polysaccharide A selected from the group consisting of tamarind seed gum, locust bean gum, tara gum, and derivatives thereof.

## Description

### TECHNICAL FIELD

The present invention relates to a pouch comprising a water-soluble film, a laminate comprising a water-soluble film and a support, and a coating agent for forming a water-soluble film.

### BACKGROUND ART

A method is known in which a liquid chemical is packaged in a water-soluble film to fabricate a pouch form, the pouch is put in water as it is at the time of use, and the contents are dissolved in water together with the film to be used (Patent Document 1).

### PRIOR ART DOCUMENT

### PATENT DOCUMENT

Patent Document 1: JP 2019-081901 A

### SUMMARY OF THE INVENTION

### PROBLEMS TO BE SOLVED BY THE INVENTION

For example, when the pouch is filled with a laundry detergent or the like and used, if the solubility of the pouch in cold water is low, it takes time for the pouch to dissolve, and thus there is a possibility that undissolved residues remain in clothes. In addition, particularly when a polysaccharide is contained, solubility in cold water may be low. Further, a pouch containing contents is required to have dynamic strength so that breakage or the like does not occur during transportation.

Therefore, an object of the present invention is to provide a pouch comprising a water-soluble film and a laminate comprising a water-soluble film and a support, both items being excellent in solubility at a low temperature and dynamic strength, and also provide a coating agent for forming a water-soluble film.

### SOLUTIONS TO THE PROBLEMS

As a result of intensive detailed studies to solve the above problems, the present inventors have found that the above problems can be solved and have accomplished the present invention. That is, the present invention encompasses the following preferred aspects.
[1] A pouch comprising a water-soluble film comprising at least one polysaccharide A selected from the group consisting of tamarind seed gum, locust bean gum, tara gum, and derivatives thereof.
[2] The pouch according to [1], wherein the polysaccharide A is selected from among tamarind seed gum, and derivatives thereof.
[3] The pouch according to [1] or [2], wherein the content of the polysaccharide A is 5 to 80 mass% based on the mass of the water-soluble film.
[4] The pouch according to any of [1] to [3], wherein the water-soluble film further comprises a plasticizer.
[5] The pouch according to [4], wherein the plasticizer is at least one selected from the group consisting of a polyhydric alcohol, a hydroxy acid, a monosaccharide, and a disaccharide.
[6] The pouch according to [4] or [5], wherein the plasticizer is at least one selected from the group consisting of glycerin, diglycerin, sorbitol, alkylene glycol, polyalkylene glycol, trimethylolpropane, erythritol, 2-methyl-1,3-propanediol, lactic acid, glucose, fructose, maltose, and trehalose.
[7] The pouch according to any of [4] to [6], wherein the plasticizer is at least one selected from the group consisting of glycerin, ethylene glycol, sorbitol, and fructose.
[8] The pouch according to any of [4] to [7], wherein the content of the plasticizer is 20 to 95 mass% based on the mass of the water-soluble film.
[9] The pouch according to any of [1] to [8], wherein the water-soluble film further comprises a polysaccharide B different from the polysaccharide A.
[10] The pouch according to [9], wherein the polysaccharide B is at least one selected from the group consisting of guar gum, locust bean gum, xanthan gum, carrageenan, alginic acid, pullulan, and derivatives thereof.
[11] The pouch according to [9] or [10], wherein the content of the polysaccharide B is 1 to 30 mass% based on the mass of the water-soluble film.
[12] The pouch according to any of [1] to [11], wherein the water-soluble film has a toughness of 400 or more.
[13] The pouch according to any of [1] to [12], wherein the pouch dissolves in water at 10°C within 1000 seconds.
[14] The pouch according to any of [1] to [13], wherein the pouch contains therein at least one selected from the group consisting of a cleaning agent, a softener, and a perfume.
[15] A water-soluble film comprising at least one polysaccharide A selected from the group consisting of tamarind seed gum, locust bean gum, tara gum, and derivatives thereof.
[16] A water-soluble film comprising at least one polysaccharide A selected from the group consisting of tamarind seed gum, locust bean gum, tara gum, and derivatives thereof and a polysaccharide B different from the polysaccharide A.
[17] A water-soluble film to be used for a pouch, the water-soluble film comprising at least one polysaccharide A selected from the group consisting of tamarind seed gum, locust bean gum, tara gum, and derivatives thereof, and a plasticizer, wherein the content of the plasticizer is 45 mass% or less based on the mass of the water-soluble film.
[18] The water-soluble film according to any of [15] to [17], wherein the water-soluble film is a coating film formed from a coating agent comprising at least one polysaccharide A selected from the group consisting of tamarind seed gum, locust bean gum, tara gum, and derivatives thereof.
[19] A laminate comprising the water-soluble film according to any of [15] to [17] and a support, wherein the support is paper or a film.
[20] A packaging material comprising the water-soluble film according to [15].
[21] A coating agent comprising at least one polysaccharide A selected from the group consisting of tamarind seed gum, locust bean gum, tara gum, and derivatives thereof.

### EFFECTS OF THE INVENTION

According to the present invention, it is possible to provide a pouch comprising a water-soluble film and a laminate comprising a water-soluble film and a support, both items being excellent in solubility at a low temperature and dynamic strength, and also provide a coating agent for forming a water-soluble film.

### DETAILED DESCRIPTION

Hereinafter, embodiments of the present invention will be described in detail. It is noted that the following is a description that exemplifies embodiments of the present invention, and the present invention is not intended to be limited to the following embodiments. The plurality of upper limit values and lower limit values described in the present description can be arbitrarily combined to form a suitable numerical range.

### [Pouch]

The pouch of the present invention comprises a water-soluble film comprising at least one polysaccharide A selected from the group consisting of tamarind seed gum, locust bean gum, tara gum, and derivatives thereof.

### <Polysaccharide A>

Tamarind seed gum is a polysaccharide obtained from seeds of tamarind (Tamarindus indica), and has a structure in which glucose is a main chain and xylose and galactose are bonded in a side chain. As the tamarind seed gum, commercially available products, such as "GLYLOID 6C (registered trademark)", "Glyate (registered trademark)", "GLYLOID (registered trademark) 3S", "GLYLOID (registered trademark) 2A" (manufactured by MP Gokyo Food & Chemical Co., Ltd.), and "TG120" (manufactured by Mitsubishi Chemical Corporation), may be used.

Locust bean gum is a polysaccharide obtained from seeds of locust bean (Celatonia siliqua), and has a structure in which mannose is a main chain and galactose is bonded in a side chain. As the locust bean gum, commercially available products, such as "SOALOCUST A120", "SOALOCUST A200", "MC1000" (manufactured by Mitsubishi Chemical Corporation), and GRINSTED LBG 860 (manufactured by Sansho Co., Ltd.), may be used.

Tara gum is a polysaccharide obtained from seeds of tara (Caesalpinia spinosa), and has a structure in which mannose is a main chain and galactose is bonded in a side chain. As the tara gum, commercially available products, such as "MT120", "MT1000" (manufactured by Mitsubishi Chemical Corporation), and SPINOGUM D (manufactured by Sansho Co., Ltd.), may be used.

Examples of derivatives of these polysaccharides A include anionized products obtained by introduction of a carboxymethyl group or the like, and sodium salts, potassium salts, and calcium salts thereof; anionized products obtained by introduction of a quaternary ammonium group or the like and chlorides thereof; etherified products with ethylene oxide or propylene oxide; enzyme-treated products; acid hydrolysates. As the polysaccharide A, a single polysaccharide may be used alone, or two or more polysaccharides may be used in combination.

In one embodiment of the present invention, the number average molecular weight (sometimes referred to as Mn) of the polysaccharide A is preferably 5 k to 50,000 kDa, more preferably 7 k to 10,000 kDa, and still more preferably 10 k to 5,000 kDa, and may be, for example, 10 k to 3,000 kDa, 15 k to 1000 kDa, or 20 to 700 kDa; and the weight average molecular weight (sometimes referred to as Mw) of the polysaccharide A is preferably 5 k to 150,000 kDa, more preferably 10 k to 50,000 kDa, and still more preferably 20 k to 30,000 kDa, and may be, for example, 30 k to 10,000 kDa, 50 k to 7, 000 kDa, or 70 k to 5,000 kDa. When the Mn and/or the Mw of the polysaccharide A are within the above range, the solubility of the pouch at a low temperature and the dynamic strength of the pouch can be enhanced. When the polysaccharide A is composed of two or more polysaccharides, the Mn of the polysaccharide A is a weighted average of the Mn of the two or more polysaccharides. The same applies to Mw.

In one embodiment of the present invention, the Mn of the tamarind seed gum is preferably 10 k to 3,000 kDa, more preferably 30 k to 1,000 kDa, and still more preferably 50 k to 500 kDa, and may be, for example, 100 k to 500 kDa. The Mw of the tamarind seed gum is preferably 10 k to 50,000 kDa, more preferably 30 k to 10,000 kDa, and still more preferably 50 k to 5,000 kDa, and may be, for example, 500 k to 4,500 kDa or 1,000 k to 4,000 kDa.

The Mn of the locust bean gum is preferably 5 k to 50,000 kDa, more preferably 7 k to 10,000 kDa, and still more preferably 10 k to 5,000 kDa, and may be, for example, 15 to 1,000 kDa or 20 to 300 kDa. The Mw of the locust bean gum is preferably 5 k to 150,000 kDa, more preferably 10 k to 30,000 kDa, and still more preferably 15 k to 15,000 kDa, and may be, for example, 20 k to 5,000 kDa, 30 k to 1,000 kDa, or 50 k to 500 kDa.

The Mn of the tara gum is preferably 5 k to 10,000 kDa, more preferably 7 k to 5,000 kDa, and still more preferably 10 k to 1,000 kDa, and the Mw of the tara gum is preferably 5 k to 30,000 kDa, more preferably 10 k to 15,000 kDa, and still more preferably 15 k to 10,000 kDa.

When the Mn and/or the Mw of each polysaccharide are within the above range, the solubility of the pouch at a low temperature and the dynamic strength of the pouch can be enhanced. As the polysaccharide A, the same kind of polysaccharides having different Mn and/or Mw may also be contained.

The Mn and the Mw of the polysaccharide A can be determined by gel filtration HPLC, and can be determined, for example, by the method described in Examples described later.

The present inventor conducted studies focusing on polysaccharides, and has found that a film formed using at least one polysaccharide A selected from the group consisting of tamarind seed gum, locust bean gum, tara gum, and derivatives thereof is unexpectedly excellent in both solubility at a low temperature and dynamic strength. The reason for this is not clear, but it is presumed that these polysaccharides A have a structure having a steric hindrance in the side chain, so that crystallization is easily suppressed, which is advantageous from the viewpoint of water solubility, and dynamic strength is easily increased because a higher order network can be formed by intermolecular interaction or hydrogen bonding. In addition, since the polysaccharides A are high in heat resistance, acid resistance, and salt resistance, a decrease in molecular weight due to heat dissolution during film production is small, and a change in physical properties is small even when they come into contact with a liquid containing an acid or a salt, and therefore they can be suitably used for pouches. In addition, since the polysaccharides A are high also in resistance to enzymes such as amylase, they can be suitably used for, for example, pouches for detergents containing enzymes.

The content of the polysaccharide A may be, for example, 0.1 to 100 mass%, 1 to 95 mass%, or 3 to 90 mass% based on the mass of the water-soluble film, and is preferably 5 to 80 mass%, more preferably 10 to 70 mass%, still more preferably 20 to 60 mass%, further preferably 25 mass% or more and less than 60 mass%, particularly preferably 30 to 58 mass%, particularly more preferably 32 to 55 mass%, and particularly still more preferably 35 to 50 mass% or 37 to 48 mass%. When the content of the polysaccharide A is within the above range, the solubility of the pouch at a low temperature and the dynamic strength of the pouch are excellent.

As a preferred aspect of the present invention, the polysaccharide A is preferably selected from among tamarind seed gum and derivatives thereof. When the polysaccharide A is selected from among tamarind seed gum and derivatives thereof, the solubility of the pouch at a low temperature and the dynamic strength of the pouch are better. As a more preferred aspect, the polysaccharide A is preferably selected from the group consisting of tamarind seed gum, a sodium or potassium salt of an anionized product of tamarind seed gum, and an enzyme-treated product of tamarind seed gum.

### <Plasticizer>

In the pouch of the present invention, the water-soluble film preferably further comprises a plasticizer. When the water-soluble film comprises a plasticizer, processability can be improved such that film formation and pouching are facilitated. The plasticizer to be used for the pouch of the present invention is preferably at least one selected from the group consisting of a polyhydric alcohol, a hydroxy acid, a monosaccharide, and a disaccharide. These compounds can aggregate the polysaccharide A by a dehydration action. In addition, since a higher order network can be formed by hydrogen bonding with the polysaccharide A, the dynamic strength, particularly the elongation, of the pouch can be further enhanced in addition to the improvement in processability. As to the plasticizer, a single plasticizer may be used alone, or two or more plasticizers may be used in combination.

Examples of the polyhydric alcohol include glycerin, diglycerin, sorbitol, alkylene glycols (for example, alkylene glycols having 2 to 10 carbon atoms such as ethylene glycol, propylene glycol, and neopentyl glycol), polyalkylene glycols (for example, diethylene glycol, triethylene glycol, tetraethylene glycol, polyethylene glycol having a molecular weight of up to 400, polypropylene glycol having a molecular weight of up to 400), trimethylolpropane, erythritol, xylitol, 2-methyl-1,3-propanediol, maltitol, mannitol, and pentaerythritol.

Examples of the hydroxy acid include lactic acid, glycolic acid, malic acid, and tartaric acid.

Examples of the monosaccharide include glucose, mannose, galactose, fructose, and xylose.

Examples of the disaccharide include maltose, trehalose, sucrose, and lactose.

Among them, from the viewpoint of further enhancing the dynamic strength of the pouch, the plasticizer is preferably at least one selected from the group consisting of glycerin, diglycerin, sorbitol, alkylene glycols, neopentyl glycol, trimethylolpropane, erythritol, 2-methyl-1,3-propanediol, lactic acid, glucose, fructose, maltose, and trehalose, and more preferably at least one selected from the group consisting of glycerin, ethylene glycol, sorbitol, and fructose.

The content of the plasticizer may be, for example, 0 to 99.9 mass%, 5 to 99 mass%, or 10 to 95 mass% based on the mass of the water-soluble film, and is preferably 20 to 95 mass%, more preferably 30 to 90 mass%, still more preferably 40 to 80 mass%, further preferably more than 40 mass% and 75 mass% or less, particularly preferably 42 to 70 mass%, particularly more preferably 45 to 68 mass%, particularly and still more preferably 50 to 65 mass% or 52 to 63 mass%. When the content of the plasticizer is within the above range, excellent processability of the film and excellent dynamic strength of the pouch can be attained.

In one embodiment of the present invention, the content ratio (mass ratio) of the polysaccharide A to the plasticizer is preferably 10 : 90 to 90 : 10, more preferably 20 : 80 to 80 : 20, still more preferably 30 : 70 to 70 : 30, further preferably 35 : 65 to 65 : 35, particularly preferably 36 : 64 to 60 : 40, or 37 : 63 to 58 : 42, particularly more preferably 38 : 62 to 55 : 45, and extremely preferably 39 : 61 to 52 : 48, or 40 : 60 to 50 : 50. When the content ratio of the polysaccharide A and the plasticizer is within the above range, the water solubility, the dynamic strength, and the low-temperature solubility of the water-soluble film can be enhanced. When the water-soluble film further comprises a polysaccharide B described later, the content ratio (mass ratio) of the polysaccharide A and the polysaccharide B to the plasticizer is preferably within the above range.

### <Polysaccharide B>

In one embodiment of the present invention, in the pouch of the present invention, the water-soluble film preferably further comprises a polysaccharide B different from the polysaccharide A. When the water-soluble film further comprises the polysaccharide B, a higher order network can be formed by hydrogen bonding with the polysaccharide A, so that the dynamic strength of the pouch can be further improved.

From the viewpoint of further enhancing the dynamic strength of the pouch, the polysaccharide B is preferably at least one selected from the group consisting of guar gum, locust bean gum, xanthan gum, carrageenan, alginic acid, pullulan, and derivatives thereof.

Guar gum is a polysaccharide obtained from the endosperm of guar bean (Cyamopsis tetragonoloba), and has a structure in which mannose is a main chain and galactose is bonded to a side chain. As the guar gum, for example, commercially available products such as "GUARPAK (registered trademark)" (manufactured by MP Gokyo Food & Chemical Co., Ltd.), "RG100" (manufactured by Mitsubishi Chemical Corporation), "JAGUAR C 17K" (cationized guar gum manufactured by Sansho Co., Ltd.), and "MEYPRO-BOND 111" (cationized guar gum manufactured by Sansho Co., Ltd.) may be used.

Xanthan gum is a polysaccharide produced by fermenting starch by bacterium Xanthomonas campestris, and has glucose as a main chain and a side chain containing one glucuronic acid between two mannoses. As the xanthan gum, for example, commercially available products such as "ECHO GUM (registered trademark)" (manufactured by MP Gokyo Food & Chemical Co., Ltd.), "SOAXAN" and "XG800" (manufactured by Mitsubishi Chemical Corporation) may be used.

Carrageenan is a polysaccharide obtained from red algae, and this has repeating units of D-galactose or 3,6-anhydro-D-galactose and has a sulfate group. Carrageenan is classified into κ (kappa) carrageenan, 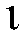 (iota) carrageenan, and λ (lambda) carrageenan. These may be used singly or two or more thereof may be used in combination. As carrageenan, commercially available products such as "GENUGEL carrageenan type JPE-126" (manufactured by Sansho Co., Ltd.), "GENUTINE VCS-J" (manufactured by Sansho Co., Ltd.), "MW210", "MV320", and "MW952" (manufactured by Mitsubishi Chemical Corporation) may be used.

Examples of the derivatives of the polysaccharide B include a sodium salt, a potassium salt, a calcium salt, a cationized product and salts thereof, an anionized product and salts thereof, an enzyme-treated product, and an acid hydrolysate. As the polysaccharide B, a single polysaccharide may be used alone, or two or more polysaccharides may be used in combination.

In one embodiment of the present invention, the number average molecular weight (sometimes referred to as Mn) of the polysaccharide B is preferably 5 k to 50,000 kDa, more preferably 10 k to 10,000 kDa, and still more preferably 10 k to 5,000 kDa, and may be, for example, 5 k to 1000 kDa, 10 k to 500 kDa, or 15 to 200 kDa. The weight average molecular weight (sometimes referred to as Mw) of the polysaccharide B is preferably 5 k to 150,000 kDa, more preferably 10 k to 50,000 kDa, and still more preferably 10 k to 30,000 kDa, and may be, for example, 10 k to 5,000 kDa, 30 k to 2,000 kDa, or 50 k to 1,000 kDa. When the Mn and/or the Mw of the polysaccharide B are within the above range, the dynamic strength of the pouch can be further enhanced. When the polysaccharide B is composed of two or more polysaccharides, the Mn of the polysaccharide B is a weighted average of the Mn of the two or more polysaccharides. The same applies to Mw.

In one embodiment of the invention, the Mn of guar gum is preferably 5 k to 20,000 kDa, more preferably 5 to 10,000 kDa, and still more preferably 7 k to 5,000 kDa, and may be, for example 10 k to 1,000 kDa or 15 k to 100 kDa. The Mw of guar gum is preferably 5 k to 100,000 kDa, more preferably 5 k to 50,000 kDa, and still more preferably 7 k to 20,000 kDa, and may be, for example, 10 k to 5,000 kDa, 30 k to 1,000 kDa, or 50 k to 500 kDa.

The Mn of xanthan gum is preferably 5 k to 50,000 kDa, more preferably 7 k to 10,000 kDa, and still more preferably 10 k to 5,000 kDa, and may be, for example, 10 k to 1,000 kDa or 15 k to 100 kDa. The Mw of xanthan gum is preferably 5 k to 150,000 kDa, more preferably 7 k to 50,000 kDa, and still more preferably 10 k to 30,000 kDa, and may be, for example, 10 k to 5,000 kDa, 30 k to 1,000 kDa, or 50 k to 500 kDa.

The Mn of carrageenan is preferably 5 k to 5,000 kDa, more preferably 10 k to 3,000 kDa, and still more preferably 20 k to 1,000 kDa, and may be, for example, 25 k to 500 kDa or 30 k to 200 kDa. The Mw of carrageenan is preferably 5 k to 15,000 kDa, more preferably 10 k to 10,000 kDa, and still more preferably 20 k to 5,000 kDa, and may be, for example, 50 k to 2,000 kDa or 100 to 1,000 kDa.

The Mn of alginic acid is preferably 5 k to 50,000 kDa, more preferably 7 k to 10,000 kDa, and still more preferably 10 k to 5,000 kDa, and may be, for example, 15 to 1,000 kDa or 20 to 300 kDa. The Mw of alginic acid is preferably 5 k to 150,000 kDa, more preferably 10 k to 30,000 kDa, and still more preferably 15 k to 15,000 kDa, and may be, for example, 20 k to 5,000 kDa, 30 k to 1,000 kDa, or 50 k to 500 kDa.

When the Mn and/or the Mw of each polysaccharide are within the above range, the dynamic strength can be further enhanced. As the polysaccharide B, the same kind of polysaccharides having different Mn and/or Mw may also be contained.

The Mn and the Mw of the polysaccharide B can be determined by gel filtration HPLC, and can be determined, for example, by the method described in Examples described later.

In the water-soluble film, the polysaccharide A is preferably selected from among tamarind seed gum or derivatives thereof, and the polysaccharide B is preferably at least one selected from the group consisting of xanthan gum, guar gum, and locust bean gum. Such a water-soluble film tends to be capable of improving the dynamic strength of the pouch while maintaining the solubility of the pouch at a low temperature.

The content of the polysaccharide B is preferably 1 to 30 mass%, more preferably 1.5 to 20 mass%, still more preferably 2 to 10 mass%, further preferably 2.5 to 7 mass%, and particularly preferably 3 to 5 mass% based on the mass of the water-soluble film. When the content of the polysaccharide B is within the above range, the solubility of the pouch at a low temperature and the dynamic strength of the pouch may be excellent.

In one embodiment of the present invention, the content ratio (mass ratio) of the polysaccharide A to the polysaccharide B is preferably 99 : 1 to 50 : 50, more preferably 98 : 2 to 55 : 45, still more preferably 95 : 5 to 60 : 40, 93 : 7 to 70 : 30, or 92 : 8 to 65 : 35, and still more preferably 91 : 9 to 70 : 30. When the content ratio of the polysaccharide A to the polysaccharide B is within the above range, the dynamic strength and the processability can be further enhanced while the water solubility of the water-soluble film is maintained.

### <Additives>

In the pouch of the present invention, the water-soluble film may contain an additive other than the plasticizer and the polysaccharide B (also referred to as additive A) as long as the effect of the present invention is not hindered. Examples of the additive A include a dispersant, moisture, an antioxidant, an ultraviolet absorber, a lubricant, a colorant, a preservative, a filler, a surfactant, an anti-stick agent, a release agent, a dye, and a crosslinking agent. As the additive A, a single agent may be used alone, or two or more agents may be used in combination. In the present description, the plasticizer, the polysaccharide B, and the additive A may be collectively and simply referred to as "additive".

The filler means a component that is incompatible with the polysaccharide A. In the pouch, when the water-soluble film contains a filler, a higher order network can be formed by hydrogen bonding with the polysaccharide A, and thus, in particular, the stress of the resulting pouch can be improved. In addition, particularly when a water-soluble film is prepared by coating, the solid component concentration is increased by adding a filler to a coating agent, and the thickness of the coating film can be increased.

Examples of the filler include inorganic pigments such as kaolin, clay, engineered kaolin, delaminated clay, heavy calcium carbonate, light calcium carbonate, mica (swellable mica, synthetic mica, muscovite, sericite, phlogopite, biotite, fluorophlogopite (artificial mica), red mica, soda mica, roscoelite, illite, tin mica, paragonite, and brittle mica), talc, titanium dioxide, barium sulfate, calcium sulfate, zinc oxide, silicic acid, silicates, bentonite (montmorillonite, beidellite, saponite, stevensite, hectorite, and the like), colloidal silica, and satin white, and organic pigments such as a solid type organic pigment, a hollow type organic pigment, and a core-shell type organic pigment. As to the filler, a single filler may be used alone, or two or more fillers may be used in combination.

In the pouch, when the water-soluble film contains a filler, the total content of the filler is preferably 0.1 to 50 mass%, more preferably 0.5 to 35 mass%, still more preferably 1 to 30 mass%, further preferably 1.5 to 20 mass%, still further preferably 2 to 18 mass%, more preferably 2 to 15 mass%, still more preferably 2 to 10 mass%, and particularly preferably 2 to 6 mass% based on the mass of the water-soluble film from the viewpoint of improving the stress of the resulting pouch. From the viewpoint of increasing the thickness of the coating film, the content is preferably 1 to 90 mass%, more preferably 5 to 80 mass%, still more preferably 10 to 75 mass%, further preferably 20 to 70 mass%, still further preferably 30 to 65 mass%, more preferably 40 to 60 mass%, still more preferably 42 to 58 mass%, and particularly preferably 45 to 55 mass%.

A dispersant may be additionally added to the coating agent for preparing the water-soluble film in the pouch. By adding the dispersant, the dispersibility of the filler can be improved.

A cationic polymer is preferable as the dispersant, and examples thereof include a polyalkylene polyamine, a polyamide compound, a polyamidoamineepihalohydrin or formaldehyde condensation reaction product, a polyamineepihalohydrin or formaldehyde condensation reaction product, a polyamide polyurea-epihalohydrin or formaldehyde condensation reaction product, a polyamine polyurea-epihalohydrin or formaldehyde condensation reaction product, a polyamide amine polyurea-epihalohydrin or formaldehyde condensation reaction product, a polyamide polyurea compound, a polyamine polyurea compound, a polyamide amine polyurea compound, and a polyamide amine compound, polyethyleneimine, polyvinylpyridine, an amino-modified acrylamide compound, polyvinylamine, polydiallyldimethylammonium chloride, and a modified polyvinyl alcohol. As to the dispersant, a single dispersant may be used alone, or two or more dispersants may be used in combination.

In the pouch, when the water-soluble film contains a dispersant, the content of the dispersant is preferably 0.01 to 20 mass%, more preferably 0.1 to 10 mass%, and still more preferably 1 to 5 mass% based on the mass of the water-soluble film.

Examples of the crosslinking agent include tannic acid and salts thereof, tannin other than tannic acid, catechin, anthocyanin, gallic acid and salts thereof, phenols, and hydroquinone.

The content of the additive A is not particularly limited as long as the effect of the present invention is not hindered, but is approximately, for example, 0 to 10 mass%, preferably 0.001 to 10 mass%, more preferably 0.01 to 5 mass%, and still more preferably 0.1 to 1 mass% based on the mass of the water-soluble film.

In one embodiment of the present invention, in the pouch of the present invention, the content of the polyvinyl alcohol-based resin in the water-soluble film is preferably less than 30 mass%, more preferably 20 mass% or less, still more preferably 10 mass% or less, further preferably 5 mass% or less, particularly preferably 1 mass% or less, and particularly more preferably 0.1 mass%, and may be 0 mass%. That is, the content of the polyvinyl alcohol-based resin is preferably 0 to less than 30 mass%, more preferably 0 to 20 mass%, still more preferably 0 to 10 mass%, further preferably 0 to 5 mass%, particularly preferably 0 to 1 mass%, and particularly more preferably 0 to 0.1 mass%. As the polyvinyl alcohol-based resin to be used in the present invention, vinyl acetate composed of petroleum-derived carbon, vinyl acetate composed of biomassderived carbon, or vinyl acetate composed of a mixture thereof can be used as a raw material. In addition, a polyvinyl alcohol-based resin having an apparent biomass ratio changed by the mass balance method may be used.

In one embodiment of the present invention, in the pouch of the present invention, the total content of the polysaccharide A, the plasticizer, and the polysaccharide B contained in the water-soluble film is preferably 30 mass% or more, more preferably 50 mass% or more, still more preferably 70 mass% or more, further preferably 80 mass% or more, particularly preferably 90 mass% or more, particularly more preferably 95 mass% or more, and particularly still more preferably 98 mass% or more, and may be 100 mass% based on the mass of the water-soluble film. That is, the total content is preferably 30 to 100 mass%, more preferably 50 to 100 mass%, still more preferably 70 to 100 mass%, further preferably 80 to 100 mass%, particularly preferably 90 to 100 mass%, particularly more preferably 95 to 100 mass%, and particularly still more preferably 98 to 100 mass%. When the total content of the polysaccharide A, the plasticizer, and the polysaccharide B contained in the water-soluble film is within the above range, the solubility of the pouch at a low temperature and the dynamic strength of the pouch can be further enhanced. The total content also includes a case where the content of the plasticizer and/or the polysaccharide B is 0 mass%.

### <Water-soluble film>

The pouch of the present invention comprises a water-soluble film. In the present invention, "water-soluble" means soluble in water, and preferably means that the solubility in hot water at 90°C is 90 mass% or more. That is, when a water-soluble film is added to warm water at 90°C, the film is dissolved by stirring for 5 minutes, and then the amount of a solid component that does not pass through a filter (21 µm) is 10 mass% or less, the water-soluble film can be evaluated as being water-soluble. The mass of the water-soluble film to be dissolved in warm water at 90°C is 0.1 parts by mass with respect to 100 parts by mass of the warm water at 90°C. When the solubility of the water-soluble film in warm water at 90 °C is 90 mass% or more, preferably 95 mass% or more, and more preferably 98 mass% or more, a residue hardly remains when a pouch containing the film is used. The upper limit of the solubility of the water-soluble film is 100 mass%. That is, the solubility of the water-soluble film is 90 to 100 mass%, preferably 95 to 100 mass%, and more preferably 98 to 100 mass%. The solubility of the water-soluble film can be adjusted to the above lower limit or more by appropriately adjusting, for example, the type and/or amount or the like of the components contained in the water-soluble film (for example, additives).

In one embodiment of the present invention, the water-soluble film can be dissolved in water at 10°C preferably within 1000 seconds. That is, when a water-soluble film having a length of 30 mm × a width of 40 mm × a thickness of 50 µm is immersed in 500 mL of water at 10°C, the time taken for the water-soluble film to be completely dissolved is preferably 1000 seconds or less, more preferably 700 seconds or less, still more preferably 600 seconds or less, and further preferably 500 seconds or less, and may be, for example, 300 seconds or less or 180 seconds or less. The fact that the complete dissolution time of the water-soluble film in water at 10°C is the above upper limit or less is preferable because the contents are quickly released particularly when the pouch comprising the film is used by being dissolved in cold water. In addition, residues are less prone to remain. The lower limit of the complete dissolution time is not particularly limited, and it is preferable that the time required for complete dissolution is as short as possible. The complete dissolution time of the water-soluble film in water at 10°C can be adjusted to the above upper limit or less by appropriately adjusting, for example, the type and/or amount of the components contained in the water-soluble film; and the production conditions of the water-soluble film (drying conditions, or the like). The complete dissolution time in water at 10°C can be determined, for example, by the method described in Examples described later.

The film thickness of the water-soluble film is preferably 1 to 500 µm, more preferably 5 to 300 µm, and still more preferably 10 to 100 µm. When the thickness of the water-soluble film is within the above range, both the solubility of the pouch at a low temperature and the dynamic strength of the pouch can be good. The film thickness of the water-soluble film can be determined, for example, using a film thickness meter, and can be determined by the method described in Examples described later.

The maximum stress of the water-soluble film is preferably 5 MPa or more, more preferably 10 MPa or more, still more preferably 20 MPa or more, further preferably 25 MPa or more, and particularly preferably 30 MPa or more, and may be, for example, 35 MPa, 40 MPa, 45 MPa, or 50 MPa or more. When the maximum stress of the water-soluble film is the above lower limit or more, the dynamic strength of the pouch comprising the water-soluble film can be improved. The upper limit of the maximum stress of the water-soluble film is usually 150 MPa or less, and preferably 140 MPa or less. That is, a preferable range is 5 to 150 MPa, 10 to 150 MPa, 20 to 150 MPa, 25 to 150 MPa, 30 to 150 MPa, 35 to 150 MPa, 40 to 150 MPa, 45 to 150 MPa, or 50 to 140 MPa. The maximum stress of the water-soluble film can be adjusted to the above lower limit or more by appropriately adjusting, for example, the type and/or amount of the components contained in the water-soluble film; and the production conditions of the water-soluble film (for example, drying temperature and/or drying time).

The breaking elongation of the water-soluble film is preferably 10% or more, more preferably 25% or more, still more preferably 35% or more, further preferably 40% or more, particularly preferably 50% or more, particularly more preferably 70% or more, particularly still more preferably 75% or more, and extremely preferably 80% or more or 85% or more. When the breaking elongation of the water-soluble film is the above lower limit or more, the dynamic strength of the pouch comprising the water-soluble film can be improved. The upper limit of the breaking elongation of the water-soluble film is usually 150% or less, and preferably 140% or less. That is, a preferable range is 10 to 150%, 25 to 150%, 35 to 150%, 40 to 150%, 50 to 150%, 70 to 150%, 75 to 150%, 80 to 150%, or 85 to 140%. The breaking elongation of the water-soluble film can be adjusted to the above lower limit or more, for example, by appropriately adjusting the type and/or amount of the components contained in the water-soluble film; the production conditions of the water-soluble film (for example, drying temperature and/or drying time). The maximum stress and the breaking elongation of the water-soluble film can be determined by a tensile test, and for example, can be determined by the method described in Examples described later.

The toughness of the water-soluble film is preferably 400 or more, more preferably 900 or more, still more preferably 1100 or more, further preferably 1200 or more, particularly preferably 1300 or more, particularly more preferably 1400 or more, particularly still more preferably 1500 or more, and extremely preferably 1600 or more, and may be, for example, 1700 or more, 1800 or more, 1900 or more, or 2000 or more. When the toughness of the water-soluble film is the above lower limit or more, the dynamic strength of the pouch comprising the water-soluble film can be improved. The upper limit of the toughness is usually 3000 or less. That is, a preferable range is 400 to 3000, 900 to 3000, 1100 to 3000, 1200 to 3000, 1300 to 3000, 1400 to 3000, 1500 to 3000, 1600 to 3000, 1700 to 3000, 1800 to 3000, 1900 to 3000, or 2000 to 3000. The toughness of the water-soluble film can be determined by the maximum stress × the breaking elongation in the tensile test.

In one embodiment of the present invention, the water-soluble film does not allow the plasticizer to bleed out and is excellent in homogeneity. The surface of the water-soluble film may be flat, and from the viewpoint of preventing sticking of products, one surface or both surfaces of the water-soluble film may be subjected to uneven processing such as an embossed pattern or an uneven pattern. For such uneven processing, a method publicly-known in the art can be adopted.

### <Method for producing water-soluble film>

The method for producing the water-soluble film to be used for the pouch of the present invention is not particularly limited, and the water-soluble film can be produced by a method publicly-known in the art.

For example, the water-soluble film can be produced by a method including:
(1) a step of obtaining a coating liquid (coating agent) by, for example, stirring at least one polysaccharide A selected from the group consisting of tamarind seed gum, locust bean gum, tara gum, and derivatives thereof, a solvent, and optionally an additive at a prescribed temperature;
(2) a step of forming a coating film; and
(3) a step of drying the coating film to form a dry coating film.

The solid component concentration of the coating liquid is preferably 1 to 15 mass%, and more preferably 2 to 10 mass%. The solid component concentration indicates the total mass of the components other than the solvent (for example, the polysaccharide A and additives) based on the mass of the coating liquid.

The temperature at which the polysaccharide A, and optionally the additive and the solvent are stirred is usually 15 to 100°C, and preferably 30 to 98°C. The stirring method is not particularly limited, and stirring may be conducted by a conventionally publicly-known method.

The solvent is not particularly limited, but water, ethanol, methanol, 1-propanol, 2-propanol, and the like are preferable because the polysaccharide A is easily dissolved and subsequent drying is easily conducted.

The coating film can be formed, for example, by applying a coating liquid onto a base material. Examples of the base material include polyolefins such as polyethylene and polypropylene; polyesters such as polyethylene terephthalate; polyamides such as nylon 6 and nylon 66; fluororesin such as Teflon (registered trademark); and a metal plate.

Examples of the method for applying the coating liquid to the base material or the like include publicly-known methods such as a spin coating method, an extrusion method, a bar coating method, and an applicator method. As a coater, a blade coater, a bar coater, a roll coater, a gravure coater, a reverse gravure coater, a comma coater, an air knife coater, a reverse roll coater, a curtain coater, a spray coater, a size press coater, a gate roll coater, or the like can be used.

Subsequently, the solvent is removed by drying or the like to form a dry coating film. Examples of the drying method include a natural drying method, a forced-air drying method, a heat drying method, and a reduced-pressure drying method. As a dryer, a conventional dryer can be used, and examples thereof include a steam heater, a gas heater, an infrared heater, an electric heater, a hot air heater, a microwave, and a cylinder dryer.

The dry coating film is a water-soluble film.

Alternatively, a water-soluble film can also be produced by a melt extrusion film formation method, a blown film extrusion method, or the like in which a film-forming dope obtained using an extruder or the like is extruded through a T-die or the like to form a film.

A water-soluble film can be obtained by forming a water-soluble film on a base material and then removing the base material. Further, the water-soluble film may be used as it is without the base material being peeled off. When the base material is not peeled off, a laminate comprising the base material (support) and the water-soluble film can be obtained. In the case of peeling, it is preferable that a release agent is applied to an applied surface.

### [Laminate]

The present invention also encompasses a laminate comprising a water-soluble film comprising at least one polysaccharide A selected from the group consisting of tamarind seed gum, locust bean gum, tara gum and derivatives thereof, and a support. The support is preferably paper or a film. Since the laminate of the present invention in such an embodiment comprises a specific polysaccharide A, the laminate is excellent in solubility at a low temperature and dynamic strength.

Examples of the support in the laminate comprising a water-soluble film and a support include paper or a film (hereinafter also referred to as "support film").

When the support is paper, examples of the paper include kraft paper, machine-glazed kraft paper, machine-glazed bleached kraft paper, bleached kraft paper, unbleached kraft paper, wood-free paper, wood containing paper, coated paper, machine-glazed paper, simili paper, glassine paper, graphane paper, parchment paper, synthetic paper, white paperboard, manila board, milk carton base paper, cup base paper, ivory paper, silver-white paper, thin paper, paperboard, rayon paper, wax paper, and liner paper.

The basis weight of the paper is preferably 20 to 400 g/m², and more preferably 25 to 150 g/m² from the viewpoint of being suitable for packaging applications. The basis weight of the paper is more preferably 30 to 100 g/m², and still more preferably 40 to 70 g/m² from the viewpoint of being suitable for soft packaging material applications described later. The basis weight of paper is measured in accordance with JIS P 8124:2011.

The paper can be generally produced by paper-making a paper material containing pulp, a filler, and various aids.

Examples of the pulp include chemical pulps such as hardwood bleached kraft pulp (LBKP), softwood bleached kraft pulp (NBKP), hardwood unbleached kraft pulp (LUKP), softwood unbleached pulp (NUKP), and sulfite pulp; mechanical pulps such as stone ground pulp and thermomechanical pulp; wood fibers such as deinked pulp and waste paper pulp; and non-wood fibers obtained from kenaf, bamboo, hemp, etc. These may be used singly, or two or more of them may be used in combination. Among those, from the viewpoint of being able to reduce the possibility of contamination of base paper with foreign substances and the possibility of discoloration over time when recycled after use, and being able to realize good printing due to high whiteness and increase the value of use (particularly when used as a packaging material), it is preferable to use chemical pulp and mechanical pulp of wood fibers, and it is more preferable to use chemical pulp.

Materials other than pulp may also be blended as a sub paper material as long as the effect of the present invention is not impaired. Examples of such materials include synthetic fibers such as rayon fibers and nylon fibers.

Examples of the filler include white carbon, talc, kaolin, clay, heavy calcium carbonate, light calcium carbonate, titanium oxide, zeolite, and synthetic resin fillers. These may be used singly, or two or more of them may be used in combination.

Examples of the various aids include aluminum sulfate, various anionic, cationic, nonionic or amphoteric yield improvers, water-filterability improvers, paper strengthening agents, and internal sizing agents, and these can be used singly or two or more thereof can be used in combination. Optionally, dyes, fluorescent brighteners, pH adjusters, defoaming agents, pitch control agents, slime control agents, and additives of two or more thereof can also be used.

The method for producing the paper is not particularly limited, and for example, the paper can be produced in accordance with the following procedure.

First, a paper material is prepared by mixing a pulp slurry, a filler, and various aids. The pulp slurry can be prepared by beating pulp in the presence of water. The pulp beating method and beating device are not particularly limited, and publicly-known beating methods and beating devices can be employed. The content of the pulp in the paper material is not particularly limited. For example, the content is 60 mass% or more and less than 100 mass% based on the total mass of the paper material.

Subsequently, the prepared paper material may be subjected to papermaking in the acidic papermaking method, a neutral papermaking method, or the alkaline papermaking method using any publicly-known fourdrinier former, on-top hybrid former, gap former machine, etc. A single sheet of wet paper obtained after dehydration is pressed, or two or more sheets of the wet paper obtained after dehydration are stacked, as necessary, and pressed, followed by drying, to yield paper. At this time, when two or more sheets of the wet paper are not stacked, a single-layer paper is obtained, and when two or more sheets of wet paper are stacked, a multi-layer paper is obtained. When two or more sheets of wet paper are stacked, an adhesive may be applied to a surface of the wet paper (a surface on which another wet paper is stacked).

The paper may have a surface treated with various chemicals. Examples of the chemicals that can be used include oxidized starch, hydroxyethyl etherized starch, enzyme-modified starch, polyacrylamide, polyvinyl alcohol, a surface sizing agent, a water-resistant agent, a water retainer, a thickener, and a lubricant. These may be used singly, or two or more of them may be used in combination. Furthermore, these various agents and a pigment may be used in combination. Examples of the pigment include inorganic pigments such as kaolin, clay, engineered kaolin, delaminated clay, heavy calcium carbonate, light calcium carbonate, mica, talc, titanium dioxide, barium sulfate, calcium sulfate, zinc oxide, silicic acid, silicate salts, colloidal silica, and satin white, and organic pigments such as a solid type, a hollow type, and a core-shell type, and these pigments may be used singly or two or more thereof may be used in combination.

The method of surface treatment of paper is not particularly limited. For example, the surface of the paper can be treated using a publicly-known application device such as a rod metering size press, a pond-type size press, a gate roll coater, a spray coater, a blade coater, or a curtain coater.

When the support is a film, examples of the film include films (films of polyolefins such as polyethylene, polypropylene, and norbornene-based polymer; polyvinyl alcohol film; polyethylene terephthalate (PET) film; poly (meth)acrylic acid ester film; films of cellulose esters such as triacetyl cellulose, diacetyl cellulose and cellulose acetate propionate; polylactic acid film; ethylene-vinyl alcohol copolymer film, etc.), and a sheet.

The average thickness of the paper or film as a support is, for example, approximately 1 to 500 µm, or 10 to 300 µm.

In the laminate, the water-soluble film may have one layer or multiple layers. When the water-soluble film has multiple layers, they may be the same or different from each other. In addition, the laminate may comprise an optional layer. The laminate may have one or more layers selected from the group consisting of a barrier layer, a protective layer, and a heat seal layer as optional layers at arbitrary positions in the layer configuration. When the laminate has a protective layer and/or a heat seal layer, the layer is preferably disposed as an outermost layer of the laminate.

The barrier layer may be a gas barrier layer or a water vapor barrier layer, and such barrier layers are known in the art. Examples of the barrier layer include a resin layer and a metal foil, and more specific examples include a resin layer containing polyvinyl alcohol, an ethylene-vinyl alcohol copolymer and/or polyvinylidene chloride, a layer containing the polysaccharide A but not corresponding to the water-soluble film of the present invention, an aluminum foil, an aluminum-deposited film (an item with aluminum deposited on a base material such as polyethylene, polypropylene, nylon, polyethylene terephthalate, or an ethylene-vinyl alcohol copolymer), an aluminadeposited film (an item with alumina deposited on a base material such as polyethylene, polypropylene, nylon, polyethylene terephthalate, or an ethylene-vinyl alcohol copolymer), and a silica-deposited film (an item with silica deposited on a base material such as polyethylene, polypropylene, nylon, polyethylene terephthalate, or an ethylene-vinyl alcohol copolymer).

The protective layer is a layer that is present as at least a part of an outermost layer of the laminate and thus can reduce the influence from the surrounding environment on a constituent present below the protective layer (the deterioration of the constituent). Therefore, the protective layer may have one or more functions selected from the group consisting of barrier property, oil resistance, solvent resistance, heat resistance, abrasion resistance, impact resistance, weather resistance, and light resistance. When the protective layer covers throughout an outermost layer of the laminate, the function can be further exhibited. Examples of the protective layer include a resin layer, a paper layer, and a metal foil.

As the heat seal layer, those known in the art can be used. The heat seal layer is preferably a resin layer having heat sealability. The heat seal layer preferably contains a water-dispersible resin and optionally additives. Examples of the water-dispersible resin include polyolefin resins, acrylic resins such as a styrene/acrylic copolymer and an ethylene-(meth)acrylic acid copolymer, an ethylene-vinyl acetate copolymer, polyester resins, rubber-based resins, urethane resins, polyamide resins, and combinations thereof. Examples of optional additives include lubricants such as paraffin wax, carnauba wax and polyolefin-based wax, pigments such as silica and kaolin, and combinations thereof. The heat seal layer may have a barrier property, in which case the layer may function as a heat seal layer and a barrier layer.

When the support is a film having a barrier property or a protective property, the film can also function as a barrier layer or a protective layer.

Examples of a specific layer configuration of the laminate in the present invention, which comprises a water-soluble film and a support and may have an optional layer (barrier layer, protective layer, heat seal layer), include the following configurations. The following configurations are each written from the layer that is to serve as the outermost layer (the layer opposite from the layer in contact with contents) when used as, for example, a packaging material.
Water-soluble film/paper or support film or metal foil,
gas barrier layer or water vapor barrier layer/water-soluble film/paper or support film or metal foil,
water vapor barrier layer/gas barrier layer/water-soluble film/paper or support film or metal foil,
gas barrier layer/water vapor barrier layer/water-soluble film/paper or support film or metal foil,
protective layer/water-soluble film/paper or support film or metal foil,
protective layer/gas barrier layer or water vapor barrier layer/water-soluble film/paper or support film or metal foil,
protective layer/water vapor barrier layer/gas barrier layer/water-soluble film/paper or support film or metal foil,
protective layer/gas barrier layer/water vapor barrier layer/water-soluble film/paper or support film or metal foil,
protective layer/water-soluble film/gas barrier layer or water vapor barrier layer/paper or support film or metal foil,
protective layer/water-soluble film/water vapor barrier layer/gas barrier layer/paper or support film or metal foil,
protective layer/water-soluble film/gas barrier layer/water vapor barrier layer/paper or support film or metal foil,
protective layer/gas barrier layer or water vapor barrier layer/water-soluble film/paper or support film or metal foil/gas barrier layer or water vapor barrier layer,
protective layer/water vapor barrier layer/gas barrier layer/water-soluble film/paper or support film or metal foil/gas barrier layer or water vapor barrier layer,
protective layer/gas barrier layer/water vapor barrier layer/water-soluble film/paper or support film or metal foil/gas barrier layer or water vapor barrier layer,
protective layer/water vapor barrier layer/gas barrier layer/water-soluble film/paper or support film or metal foil/gas barrier layer/water vapor barrier layer,
protective layer/water vapor barrier layer/gas barrier layer/water-soluble film/paper or support film or metal foil/water vapor barrier layer/gas barrier layer,
protective layer/gas barrier layer/water vapor barrier layer/water-soluble film/paper or support film or metal foil/gas barrier layer/water vapor barrier layer,
protective layer/gas barrier layer/water vapor barrier layer/water-soluble film/paper or support film or metal foil/water vapor barrier layer/gas barrier layer,
   a layer configuration comprising a heat seal layer on a side opposite from a layer serving as the outermost layer in any of the layer configurations listed above,
   a layer configuration comprising a heat seal layer in place of the protective layer in any of the layer configurations listed above, for example, heat seal layer/water-soluble film/paper or support film or metal foil,
   a layer configuration comprising an adhesive layer at one or more locations between layers in any of the layer configurations listed above, for example, heat seal layer/adhesive layer/water-soluble film/paper or support film or metal foil.

More specific layer configurations include, for example, the following configurations.
Water-soluble film/paper,
LLDPE/water-soluble film/paper,
LLDPE/adhesive layer/water-soluble film/paper,
LDPE/water-soluble film/paper,
LDPE/adhesive layer/water-soluble film/paper,
HDPE/water-soluble film/paper,
HDPE/adhesive layer/water-soluble film/paper,
CPE (cast polyethylene)/water-soluble film/paper,
CPE (cast polyethylene)/adhesive layer/water-soluble film/paper,
polyethylene formed from a polyethylene emulsion/water-soluble film/paper,
polyethylene formed from a polyethylene emulsion/adhesive layer/water-soluble film/paper,
uniaxially stretched polyethylene/water-soluble film/paper,
uniaxially stretched polyethylene/adhesive layer/water-soluble film/paper,
biaxially stretched polyethylene/water-soluble film/paper,
biaxially stretched polyethylene/adhesive layer/water-soluble film/paper,
polypropylene/water-soluble film/paper,
polypropylene/adhesive layer/water-soluble film/paper,
uniaxially stretched polypropylene/water-soluble film/paper,
uniaxially stretched polypropylene/adhesive layer/water-soluble film/paper,
biaxially stretched polypropylene/water-soluble film/paper,
biaxially stretched polypropylene/adhesive layer/water-soluble film/paper,
PLA/water-soluble film/paper,
PLA/adhesive layer/water-soluble film/paper,
PHA/water-soluble film/paper,
PHA/adhesive layer/water-soluble film/paper,
PHBH/water-soluble film/paper,
PHBH/adhesive layer/water-soluble film/paper,
PCL/water-soluble film/paper,
PCL/adhesive layer/water-soluble film/paper,
PBAT/water-soluble film/paper,
PBAT/adhesive layer/water-soluble film/paper,
PBS/water-soluble film/paper,
PBS/adhesive layer/water-soluble film/paper.

### <Method for producing laminate>

The method for producing the laminate of the present invention is not particularly limited, and the laminate can be produced by a method publicly-known in the art.

The laminate of the present invention can be produced, for example, by a method including the same steps as (1) to (3) described in the method for producing a water-soluble film. In the laminate, there may be a single layer of the coating film or a plurality of layers of the coating film. It is also possible to produce a multilayer laminate including arbitrary layers in an arbitrary lamination order by repeating an operation of coating of a coating liquid (coating agent) on a support and removing a solvent.

The laminate of the present invention can also be produced, for example, by integrating a water-soluble film produced by a melt extrusion film formation method, a blown film extrusion method or the like in which a film-forming dope (water-soluble film forming material) obtained using an extruder or the like is extruded through a T-die or the like to form a film, with a support. The integrating method is not limited, and examples thereof include a method in which water is applied to a surface of a water-soluble film, and the applied surface is bonded to a support to integrate the water-soluble film with the support, a method in which a water-soluble film and a support are integrated by thermocompression bonding, a method in which a water-soluble film and a support are integrated with a pressure-sensitive adhesive or an adhesive interposed therebetween, and a blown film extrusion method in which a water-soluble film forming material and a material for forming a support (film) are co-extruded.

In the case of integration by thermocompression bonding, the conditions thereof may be appropriately selected according to the type of the polysaccharide(s) contained in the water-soluble film and the type and amount of the plasticizer in the case of being contained. For example, the integration can be conducted by pressure bonding for 0.1 to 10 seconds at a temperature of 100 to 200°C and a pressure of 0.1 to 30 MPa.

When the integration is conducted with the interposition of a pressure-sensitive adhesive or an adhesive, such a pressure-sensitive adhesive or an adhesive is known in the art.

The laminate of the present invention can also be produced as a multilayer laminate by bonding a plurality of water-soluble films obtained by a melt extrusion film formation method, a blown film extrusion method, or the like to a support by a publicly-known method.

When the laminate comprises a plurality of water-soluble films, a water-soluble film produced by coating and a water-soluble film produced by a melt extrusion film formation method, a blown film extrusion method, or the like may be included in combination.

### <Pouch>

Since the pouch of the present invention comprises the water-soluble film, the pouch is excellent in solubility at a low temperature and dynamic strength. Thus, the pouch of the present invention dissolves in water at 10°C preferably within 2000 seconds, more preferably within 1500 seconds, still more preferably within 1000 seconds, further preferably within 700 seconds, particularly preferably within 600 seconds, and particularly more preferably within 500 seconds. The lower limit of the dissolution time is not particularly limited, and it is preferable that the dissolution time is as short as possible. The solubility of the pouch in water at 10°C can be adjusted to the above lower limit or more by appropriately adjusting, for example, the type and/or amount of the components (for example, additives) contained in the water-soluble film constituting the pouch; and the production conditions of the pouch (for example, the amount of water to be applied, the temperature, and the pressure at the time of water sealing, and the temperature and the pressure at the time of heat sealing). The solubility of the pouch in water at 10°C can be determined, for example, by the method described in Examples described later.

The film contained in the pouch may be a monolayer film or a multilayer film. When the pouch comprises a monolayer film (or consists of a monolayer film), the monolayer film is the water-soluble film described above. When the pouch comprises a multilayer film (or consists of a multilayer film), the multilayer film may be a laminate of a plurality of the water-soluble films described above, or may be a laminate of the water-soluble film described above and another water-soluble film other than the water-soluble film described above. From the viewpoint of enhancing the solubility of the pouch at a low temperature and the dynamic strength of the pouch, the pouch is preferably composed of a single layer or multiple layers of the water-soluble film, and from the viewpoint of production efficiency, the pouch is more preferably composed of a single layer of the water-soluble film.

The pouch of the present invention is excellent in dynamic strength, and the compressive strength thereof is preferably 50 N or more, more preferably 100 N or more, still more preferably 200 N or more, further preferably 300 N or more, and particularly preferably 400 N or more, and may be, for example, 500 N, 600 N, 700 N, or 800 N or more. The upper limit of the compressive strength of the pouch is usually 2000 N or less, and preferably 1000 N or less. That is, a preferable range is 50 to 2000 N, 100 to 2000 N, 200 to 2000 N, 300 to 2000 N, 400 to 2000 N, 500 to 2000 N, 600 to 2000 N, 700 to 2000 N, or 800 to 1000 N. The compressive strength of the pouch can be adjusted to the above lower limit or more by appropriately adjusting, for example, the type and/or amount of the components contained in the water-soluble film constituting the pouch; and the production conditions of the water-soluble film (for example, the drying temperature and/or the drying time); and the production conditions of the pouch (for example, the amount of water to be applied, the temperature, and the pressure at the time of water sealing, and the temperature and the pressure at the time of heat sealing).

The pouch is not particularly limited as long as it can package a substance (preferably contents), and may be one in which the inside is sealed or one in which a part thereof is open. Although not limited, the pouch may be in the form of, for example, a two-way pouch, a three-way pouch, a flat pouch, a standing pouch, a gusset pouch, a bottom gusset pouch, a twin pouch, a spout pouch, a side seal pouch, a bottom seal pouch, or the like, or may be in the form of a container, a cup, or the like. In one embodiment of the present invention, the pouch may be partially open, but it is preferable that the inside is sealed. In such an embodiment, the pouch is more preferably one which contains the contents therein and whose inside is sealed.

### [Method for producing pouch]

The method for producing the pouch of the present invention from the water-soluble film is not particularly limited, and the pouch can be produced by a method publicly-known in the art.

The pouch of the present invention can be produced, for example, by a method including a step of sealing one or two or more water-soluble films into a bag shape. Further, a pouch containing contents can be produced, for example, by a method including a step of feeding the contents into a film formed in a bag shape and a step of sealing the feeding port; or via a step of forming a recess in a first film, a step of putting contents into the recess, a step of sticking and sealing a second film, and the like.

Examples of the method of sealing the water-soluble film include a method of sealing by applying water to a film surface and bonding on the applied surface (also referred to as water sealing), a method of sealing by thermocompression bonding (also referred to as heat sealing), and a method of sealing with a pressure-sensitive adhesive.

Water sealing is preferable from the viewpoint of less thermal degradation of the film.

In one embodiment of the present invention, water sealing can be suitably used because the water-soluble film has high adhesive strength due to moisture. In another embodiment of the present invention, the water-soluble film has high water sealability and low heat sealability. Due to the low heat sealability, when the film is produced by a roll-to-roll method, the film is less likely to adhere to a roll, and damage during the production can be effectively suppressed. Furthermore, due to the high water sealability, the produced water-soluble film can be easily formed into a pouch by moisture.

### [Use of pouch]

The pouch of the present invention is excellent in solubility at a low temperature and dynamic strength, and thus can be suitably used particularly for applications in which the pouch is used by being dissolved in cold water. Therefore, the pouch of the present invention preferably contains at least one selected from the group consisting of a cleaning agent, a softener, and a perfume therein. The physical properties of the contents are not particularly limited, and may be acidic, neutral, or alkaline. The form of the contents may be any of a powder form, a lump form, a gel form, and a liquid form.

### [Water-soluble film]

The present invention also encompasses a water-soluble films comprising at least one polysaccharide A selected from the group consisting of tamarind seed gum, locust bean gum, tara gum, and derivatives thereof. Since the water-soluble film of the present invention in such an embodiment comprises a specific polysaccharide A, the water-soluble film is excellent in solubility at a low temperature and dynamic strength, and can also form a pouch having such characteristics. The water-soluble film is the same as the water-soluble film described in the above [Pouch] section.

The present invention also encompasses a water-soluble film comprising at least one polysaccharide A selected from the group consisting of tamarind seed gum, locust bean gum, tara gum, and derivatives thereof and a polysaccharide B different from the polysaccharide A. Since the water-soluble film of the present invention in such an embodiment comprises a specific polysaccharide A and a polysaccharide B, the water-soluble film is excellent in solubility at a low temperature and dynamic strength, and can also form a pouch having such characteristics. The water-soluble film is preferably the same as the water-soluble film described in the above [Pouch] section except that the water-soluble film comprises the polysaccharide B as an essential component in addition to the polysaccharide A.

In addition, the present invention also encompasses a water-soluble film to be used for a pouch, the water-soluble film comprising at least one polysaccharide A selected from the group consisting of tamarind seed gum, locust bean gum, tara gum, and derivatives thereof, and a plasticizer, wherein the content of the plasticizer is 45 mass% or less based on the mass of the water-soluble film. Since the water-soluble film of the present invention in such an embodiment comprises at least one polysaccharide A selected from the group consisting of tamarind seed gum, locust bean gum, tara gum, and derivatives thereof, the water-soluble film is excellent in solubility at a low temperature and dynamic strength, and can also form a pouch having such characteristics. Furthermore, in the water-soluble film, the plasticizer is less likely to bleed out to the film surface. The water-soluble film is preferably the same as the water-soluble film described in the above [Pouch] section except that the water-soluble film comprises at least one polysaccharide A selected from the group consisting of tamarind seed gum, locust bean gum, tara gum, and derivatives thereof and a plasticizer, and it is essential that the content of the plasticizer is 45 mass% or less.

From the viewpoint that the plasticizer is less likely to bleed out to the film surface, the content of the plasticizer is preferably 40 mass% or less, more preferably 35 mass% or less, and still more preferably 30 mass% or less based on the mass of the water-soluble film. The lower limit of the content of the plasticizer is usually 1 mass% or more, preferably 3 mass% or more, and more preferably 5 mass% or more. Therefore, a preferable range is 1 to 40 mass%, 3 to 35 mass%, or 5 to 30 mass%.

### [Packaging material]

The present invention also encompasses a packaging material comprising a water-soluble film comprising at least one polysaccharide A selected from the group consisting of tamarind seed gum, locust bean gum, tara gum, and derivatives thereof. Since the packaging material of the present invention in such an embodiment comprises a specific polysaccharide A, the packaging material is excellent in solubility at a low temperature and dynamic strength. The water-soluble film constituting the packaging material is preferably the same as the water-soluble film described in the above [Pouch] section, and preferably has the same solubility and dynamic strength. The packaging material preferably has solubility and dynamic strength the same as those of the pouch described in the above [Pouch] section.

The packaging material is a film to be used for packaging, and may comprise a thin film, a thick film, or the like, or may be in the form of a container, a cup, a tube, a tray, a bottle, or the like. In one embodiment of the present invention, the packaging material may contain a substance, preferably at least one selected from the group consisting of a cleaning agent, a softener, and a perfume therein, similarly to the pouch described above.

### EXAMPLES

Hereinafter, the present invention will be described more specifically based on Examples and Comparative Examples, but the present invention is not limited to the following Examples.

### Molecular weight of polysaccharide

About 20 µg of each of the polysaccharides used in Examples and Comparative Examples was subjected to gel filtration HPLC under the following conditions, and the weight average molecular weight (Mw) and the number average molecular weight (Mn) were measured. The measurement solvent was selected from water or dimethyl sulfoxide (DMSO) in view of the solubility of each polysaccharide.

### (Gel filtration HPLC conditions)

Eluent: 0.1M aqueous Na nitrate solution
Column: One TSK GEL α-M was used.
Column temperature: 40°C
Flow rate: 1 mL/min
Sample concentration: 0.1 w/v%
Sample preparation: After dissolving the sample by stirring at 80°C for 2.5 hours, stirring operation was further conducted at 90°C for 30 minutes.
Filter: 0.45 µm PP filter (Whatman)
Injection amount: 100 µL
Authentic sample: PEO/PEG
Measurement time: 18 minutes
Liquid feeding unit: GPC-101 (Shodex)
Detector: RI
   or
Eluent: 5mM Na nitrate/DMSO
Column: One TSK GEL α-M was used.
Column temperature: 60°C
Flow rate: 0.8 mL/min
Sample concentration: 0.2 w/v%
Sample preparation: After dissolving the sample by stirring at 60°C for 1 hour, stirring operation was further conducted at 65°C for 2.5 hours.
Filtration: 0.45 µm PP filter (Whatman)
Injection amount: 100 µL
Authentic sample: PMMA-R, Y, G
Measurement time: 18 minutes
Liquid feeding unit: GPC-101 (Shodex)
Detector: RI

### Preparation of water-soluble film

### <Example 1>

Six grams of tamarind seed gum (weight average molecular weight: 3,700 kDa, number average molecular weight: 429 kDa; "GLYLOID 6C (registered trademark)" manufactured by MP Gokyo Food & Chemical Co., Ltd.) was added to water, and the mixture was heated and stirred at 95°C for 2 hours, affording an aqueous solution having a concentration of 4%. Four grams of glycerin was added thereto, and a coating liquid was thereby prepared. The coating liquid was applied onto a polyethylene terephthalate film with a bar coater, dried with hot air at 60°C for 1 hour, and the resulting dry coating film was peeled off from the polyethylene terephthalate film base material, affording a film having a thickness of about 50 µm.

### <Examples 2 to 6>

Films were obtained in the same manner as in Example 1 except that the blending amounts of tamarind seed gum and glycerin were changed to the amounts shown in Table 1.

### <Example 7>

A film was obtained in the same manner as in Example 1 except that sorbitol was added in addition to glycerin at the time of the addition of glycerin, and each component was added in the blending amount shown in Table 1.

### <Examples 8 to 10>

Films were obtained in the same manner as in Example 1 except that tannic acid was added in addition to glycerin at the time of the addition of glycerin, and each component was added in the blending amount shown in Table 1.

### <Examples 11 to 14>

Films were obtained in the same manner as in Example 1 except that ethylene glycol was added instead of glycerin, and each component was added in the blending amount shown in Table 1.

### <Examples 15 to 17>

Films were obtained in the same manner as in Example 1 except that fructose was added instead of glycerin, and each component was added in the blending amount shown in Table 1.

### <Example 18>

A film was obtained in the same manner as in Example 1 except that xanthan gum (weight average molecular weight: 92 kDa, number average molecular weight: 16 kDa; "KIMICA XANTHAN PH-R3EC" manufactured by KIMICA Corporation) was added in addition to glycerin at the time of the addition of glycerin, and each component was added in the blending amount shown in Table 1.

### <Example 19>

A film was obtained in the same manner as in Example 1 except that guar gum (weight average molecular weight: 93 kDa, number average molecular weight: 17 kDa; "SUPERGEL CSA200/50" manufactured by Sansho Co., Ltd.) was added in addition to glycerin at the time of the addition of glycerin, and each component was added in the blending amount shown in Table 1.

### <Example 20>

A film was obtained in the same manner as in Example 1 except that locust bean gum (weight average molecular weight: 96 kDa, number average molecular weight: 26 kDa; "GENU (registered trademark) GUM type RL-200Z" manufactured by Sansho Co., Ltd.) was added in addition to glycerin at the time of the addition of glycerin, and each component was added in the blending amount shown in Table 1.

### <Example 21>

A film was obtained in the same manner as in Example 1 except that xanthan gum and guar gum were added in addition to glycerin at the time of the addition of glycerin, and each component was added in the blending amount shown in Table 1.

### <Example 22>

A film was obtained in the same manner as in Example 1 except that xanthan gum and locust bean gum were added in addition to glycerin at the time of the addition of glycerin, and each component was added in the blending amount shown in Table 1.

### <Example 23>

A film was obtained in the same manner as in Example 17 except that locust bean gum was used instead of tamarind seed gum and glycerin was used instead of fructose.

### <Comparative Example 1>

A film was obtained in the same manner as in Example 3 except that κ-carrageenan (weight average molecular weight: 826 kDa, number average molecular weight: 48 kDa; "GENUGEL carrageenan type JPE-126" manufactured by Sansho Co., Ltd.) was used instead of tamarind seed gum.

### <Comparative Examples 2 to 4>

A film was obtained in the same manner as in Comparative Example 1 except that glycerin was added in the amount shown in Table 1.

### <Comparative Examples 5 to 6>

A film was obtained in the same manner as in Comparative Example 1 except that sorbitol was used instead of glycerin, and each component was added in the blending amount shown in Table 1.

### <Comparative Examples 7 to 8>

Films were obtained in the same manner as in Comparative Examples 5 to 6 except that sodium alginate (weight average molecular weight: 104 kDa, number average molecular weight: 43 kDa; "KIMICA ALGIN I-8" manufactured by KIMICA Corporation) was used instead of κ-carrageenan.

### <Comparative Examples 9 to 10>

Films were obtained in the same manner as in Comparative Examples 5 to 6 except that guar gum (weight average molecular weight: 93 kDa, number average molecular weight: 17 kDa; "SUPERGEL CSA200/50" manufactured by Sansho Co., Ltd.) was used instead of κ-carrageenan.

### <Comparative Example 11>

A film was obtained in the same manner as in Comparative Example 5 except that gum arabic (weight average molecular weight: 237 kDa, number average molecular weight: 45 kDa; "TIC Pretested Gum Arabic Spray Dry Powder" manufactured by Ingredion) was used instead of κ-carrageenan.

### <Comparative Example 12>

A film was obtained in the same manner as in Comparative Example 5 except that gum arabic (weight average molecular weight: 192 kDa, number average molecular weight: 71 kDa; "TIC Pretested Gum Arabic FT" manufactured by Ingredion) was used instead of κ-carrageenan.

### <Comparative Examples 13 to 14>

Films were obtained in the same manner as in Comparative Examples 5 to 6 except that a cationically modified starch ("CATO 304", manufactured by Ingredion) was used instead of κ-carrageenan.

### <Comparative Example 15>

A film was obtained in the same manner as in Example 1 except that nonionically modified starch ("National 208", Ingredion) and glycerin were added in the amounts shown in Table 1 instead of tamarind seed gum.

### <Comparative Examples 16 to 19>

Films were obtained in the same manner as in Comparative Example 15 except that nonionically modified starch ("National 208", Ingredion) and glycerin were added in the amounts shown in Table 1, respectively.

### <Comparative Example 20>

A film was obtained in the same manner as in Comparative Example 15 except that sorbitol was used instead of glycerin.

### <Comparative Example 21>

A film was obtained in the same manner as in Comparative Example 17 except that sorbitol was used instead of glycerin.

### <Comparative Example 22>

A film was obtained in the same manner as in Comparative Examples 9 to 10 except that glycerin was used instead of sorbitol.

### <Comparative Examples 23 to 24>

Films were obtained in the same manner as in Example 1 except that xanthan gum (weight average molecular weight: 92 kDa, number average molecular weight: 16 kDa; "KIMICA XANTHAN PH-R3EC" manufactured by KIMICA Corporation) was used instead of tamarind seed gum.

**[Table 1-1]**

| | | Polysaccharide A | | Plasticizer | | Polysaccharide B | | Additive | |
|---|---|---|---|---|---|---|---|---|---|
| | | Type | Blending amount [mass%] | Type | Blending amount [mass%] | Type | Blending amount [mass%] | Type | Blending amount [mass%] |
| | 1 | Tamarind seed gum | 60 | Glycerin | 40 | - | - | - | - |
| | 2 | Tamarind seed gum | 50 | Glycerin | 50 | - | - | - | - |
| | 3 | Tamarind seed gum | 40 | Glycerin | 60 | - | - | - | - |
| | 4 | Tamarind seed gum | 35 | Glycerin | 65 | - | - | - | - |
| | 5 | Tamarind seed gum | 30 | Glycerin | 70 | - | - | - | - |
| | 6 | Tamarind seed gum | 45 | Glycerin | 55 | - | - | - | - |
| | 7 | Tamarind seed gum | 40 | Glycerin/Sorbitol | 30/30 | - | - | - | - |
| | 8 | Tamarind seed gum | 39 | Glycerin | 60 | - | - | Tannic acid | 1 |
| | 9 | Tamarind seed gum | 38 | Glycerin | 60 | - | - | Tannic acid | 2 |
| Example | 10 | Tamarind seed gum | 36 | Glycerin | 70 | - | - | Tannic acid | 4 |
| | 11 | Tamarind seed gum | 60 | Ethylene glycol | 40 | - | - | - | - |
| | 12 | Tamarind seed gum | 50 | Ethylene glycol | 50 | - | - | - | - |
| | 13 | Tamarind seed gum | 40 | Ethylene glycol | 60 | - | - | - | - |
| | 14 | Tamarind seed gum | 30 | Ethylene glycol | 70 | - | - | - | - |
| | 15 | Tamarind seed gum | 50 | Fructose | 50 | - | - | - | - |
| | 16 | Tamarind seed gum | 30 | Fructose | 70 | - | - | - | - |
| | 17 | Tamarind seed gum | 20 | Fructose | 80 | - | - | - | - |
| | 18 | Tamarind seed gum | 40.5 | Glycerin | 55 | Xanthan gum | 4.5 | - | - |
| | 19 | Tamarind seed gum | 40.5 | Glycerin | 55 | Guar gum | 4.5 | - | - |
| | 20 | Tamarind seed gum | 40.5 | Glycerin | 55 | Locust bean gum | 4.5 | - | - |
| | 21 | Tamarind seed gum | 40.5 | Glycerin | 55 | Xanthan gum/Guar gum | 0.9/3.6 | - | - |
| | 22 | Tamarind seed gum | 40.5 | Glycerin | 55 | Locust bean gum/Xanthan gum | 2.25/2.25 | - | - |
| | 23 | Locust bean gum | 20 | Glycerin | 80 | - | - | - | - |

**[Table 1-2]**

| | | Polysaccharide A | | Plasticizer | | Polysaccharide | | Additive | |
|---|---|---|---|---|---|---|---|---|---|
| | | Type | Blending amount [mass%] | Type | Blending amount [mass%] | Type | Blending amount [mass%] | Type | Blending amount [mass%] |
| | 1 | κ-Carrageenan | 40 | Glycerin | 60 | - | - | - | - |
| | 2 | κ-Carrageenan | 30 | Glycerin | 70 | - | - | - | - |
| | 3 | κ-Carrageenan | 35 | Glycerin | 65 | - | - | - | - |
| | 4 | κ-Carrageenan | 35 | Glycerin | 65 | - | - | - | - |
| | 5 | κ-Carrageenan | 70 | Sorbitol | 30 | - | - | - | - |
| | 6 | κ-Carrageenan | 65 | Sorbitol | 35 | - | - | - | - |
| | 7 | Sodium alginate | 70 | Sorbitol | 30 | - | - | - | - |
| | 8 | Sodium alginate | 65 | Sorbitol | 35 | - | - | - | - |
| Comparative Example | 9 | Guar gum | 70 | Sorbitol | 30 | - | - | - | - |
| | 10 | Guar gum | 65 | Sorbitol | 35 | - | - | - | - |
| | 11 | Gum Arabic (TIC Pretested Gum Arabic Spray Dry Powder) | 70 | Sorbitol | 30 | - | - | - | - |
| | 12 | Gum Arabic (TIC Pretested Gum Arabic FT) | 70 | Sorbitol | 30 | - | - | - | - |
| | 13 | Processed starch (CATO 304) | 70 | Sorbitol | 30 | - | - | - | - |
| | 14 | Processed starch (CATO 304) | 65 | Sorbitol | 35 | - | - | - | - |
| | 15 | Processed starch (National 208) | 80 | Glycerin | 20 | - | - | - | - |
| | 16 | Processed starch (National 208) | 77 | Glycerin | 23 | - | - | - | - |
| | 17 | Processed starch (National 208) | 75 | Glycerin | 25 | - | - | - | - |
| | 18 | Processed starch (National 208) | 70 | Glycerin | 30 | - | - | - | - |
| | 19 | Processed starch (National 208) | 60 | Glycerin | 40 | - | - | - | - |
| | 20 | Processed starch (National 208) | 80 | Sorbitol | 20 | - | - | - | - |
| | 21 | Processed starch (National 208) | 75 | Sorbitol | 25 | - | - | - | - |
| | 22 | Guar gum | 30 | Glycerin | 70 | - | - | - | - |
| | 23 | Xanthan | 70 | Glycerin | 30 | - | - | - | - |
| | 24 | Xanthan | 30 | Glycerin | 70 | - | - | - | - |

### Evaluation of water-soluble film

### <Film thickness of water-soluble film>

The film thickness of a film was measured with a micrometer. The thicknesses of arbitrary five or more points of the film were measured, and the average value thereof was taken as the film thickness.

### <Water solubility of film>

Each of the films prepared in Examples was added to warm water at 90°C, and the film was stirred for 5 minutes to be dissolved, and then the amount of the solid component that did not pass through the filter (21 µm) was measured. As a result, it was 10 mass% or less in all of Examples 1 to 23. The mass of the film added was 0.1 parts by mass based on 100 parts by mass of warm water at 90°C.

### <Complete dissolution time in cold water>

Each of the films prepared in Examples and Comparative Examples was cut into a rectangle of 30 mm × 40 mm, and this was inserted into a slide mount. Separately, a glass beaker having a capacity of 600 ml and containing 500 ml of distilled water was placed in a thermostatic bath adjusted to 10°C, and stirring was conducted at 400 rpm using a 5 cm rotor. After the temperature of the distilled water in the beaker reached 10°C, the slide mount was immersed in stirred water. The dissolution state of the film was visually observed, the time (seconds) until the film was completely dissolved was measured, and evaluation was conducted according to the following evaluation criteria. When a film having a film thickness different from 50 µm was used, the complete dissolution time was converted into a value for a film thickness of 50 µm according to the following equation. 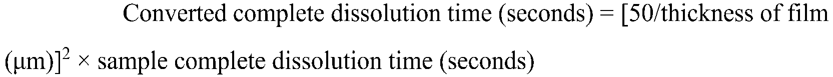 Converted complete dissolution time (seconds) = [50/thickness of film (µm)]2 × sample complete dissolution time (seconds)

A case where the converted complete dissolution time was within 600 seconds was recorded as A, and a case where the converted complete dissolution time was more than 600 seconds was recorded as B.

### <Toughness of film>

The films prepared in Examples and Comparative Examples were stored under an environment of 23°C and a humidity of 50% RH for 7 days, and then each of the films was cut into five specimens each having a width of 10 mm and a length of 120 mm. For each of the prepared test pieces, the maximum stress and the breaking elongation were measured at a distance between chucks of 70 mm and a tensile speed of 500 mm/min using an autograph (device name: AG-5000B, Shimadzu Corporation), and the average values thereof were determined. The value of maximum stress × breaking elongation was defined as the toughness of the film.

The results of the evaluations are shown in Table 2.

**[Table 2-1]**

| | | Film thickness [µm] | Maximum stress [Mpa] | Breaking elongation [%] | Toughness | Cold water dissolution time |
|---|---|---|---|---|---|---|
| | 1 | 102 | 33.0 | 33.0 | 1089 | A |
| | 2 | 85 | 31.0 | 52.0 | 1612 | A |
| | 3 | 103 | 20.0 | 86.0 | 1720 | A |
| | 4 | 77 | 17.0 | 94.0 | 1598 | A |
| | 5 | 85 | 14.0 | 94.0 | 1316 | A |
| | 6 | 50 | 23.0 | 89.0 | 2047 | A |
| | 7 | 84 | 28.0 | 50.0 | 1400 | A |
| | 8 | 79 | 20.0 | 88.0 | 1760 | A |
| | 9 | 73 | 20.0 | 89.0 | 1780 | A |
| | 10 | 64 | 16.0 | 89.0 | 1424 | A |
| | 11 | 94 | 20.0 | 92.0 | 1840 | A |
| Example | 12 | 42 | 55.7 | 26.1 | 1457 | A |
| | 13 | 34 | 53.3 | 33.3 | 1777 | A |
| | 14 | 25 | 50.0 | 28.1 | 1404 | A |
| | 15 | 74 | 82.1 | 13.5 | 1111 | A |
| | 16 | 97 | 36.9 | 39.7 | 1466 | A |
| | 17 | 88 | 21.5 | 59.1 | 1273 | A |
| | 18 | 56 | 25.0 | 79.0 | 1975 | A |
| | 19 | 53 | 19.0 | 82.0 | 1558 | A |
| | 20 | 50 | 25.0 | 93.0 | 2325 | A |
| | 21 | 52 | 19.0 | 82.0 | 1558 | A |
| | 22 | 62 | 24.0 | 84.0 | 2016 | A |
| | 23 | 71 | 7.5 | 110.0 | 825 | A |

**[Table 2-2]**

| | | Film thickness [µm] | Maximum stress [Mpa] | Breaking elongation [%] | Toughness | Cold water dissolution time |
|---|---|---|---|---|---|---|
| | 1 | 94 | 22.4 | 81.1 | 1815 | B |
| Comparative Example | 2 | 75 | 12.7 | 82.6 | 1048 | B |
| | 3 | 69 | 14.0 | 81.0 | 1131 | B |
| | 4 | 78 | 13.3 | 78.4 | 1044 | B |
| | 5 | 56 | 78.7 | 4.6 | 362 | B |
| | 6 | 67 | 63.6 | 4.6 | 293 | B |
| | 7 | 48 | 27.6 | 1.9 | 52 | B |
| | 8 | 54 | 38.2 | 2.2 | 84 | B |
| | 9 | 64 | 32.4 | 10.4 | 337 | B |
| | 10 | 76 | 21.4 | 11.4 | 244 | B |
| | 11 | 170 | 2.3 | 66.0 | 152 | A |
| | 12 | 105 | 0.2 | 500.0 | 100 | A |
| | 13 | 68 | 38.6 | 6.4 | 247 | A |
| | 14 | 90 | 27.8 | 2.8 | 78 | A |
| | 15 | 66 | 40.3 | 3.6 | 145 | A |
| | 16 | 40 | 38.3 | 4.1 | 157 | A |
| | 17 | 72 | 23.0 | 4.2 | 97 | A |
| | 18 | 77 | 3.0 | 115.9 | 348 | A |
| | 19 | The plasticizer bled out, and a uniform film could not be obtained. | | | | |
| | 20 | 66 | 44.9 | 7.5 | 337 | A |
| | 21 | 60 | 34.9 | 8.3 | 290 | A |
| | 22 | 97 | 6.3 | 148 | 927 | B |
| | 23 | 5 | Since the viscosity of the coating liquid was high and the film thickness decreased, physical properties could not be measured. | | | |
| | 24 | 75 | Since the plasticizer bled out and the surface of the film was sticky, physical properties could not be measured. | | | |

### Preparation of pouch

### <Example 24>

A tabletop pouch forming apparatus (DD-SR12-1 manufactured by Dada) was used for forming a pouch. The film obtained in Example 1 was cut into two pieces each having a size of 15 cm × 15 cm, which were to be served as a bottom film and a top film, respectively. The bottom film was set in a pouch mold having a bottom surface of 40 mm × 45 mm and a depth of 18 mm, heated at 100°C for 4 seconds, and then the space between the bottle film and the pouch mold was evacuated to form the bottom of a pouch. Next, water was applied to the four sides of the bottom film with a brush, the top film was placed thereon, and the four sides of each film were overlapped. The overlapping portion between the bottom film and the top film was heated and compressed at 100°C for 10 seconds, and the top film was thereby bonded to the bottom film. Thereafter, air was injected between the pouch mold and the bottom film, the molded pouch was taken out from the mold, and the peripheral film was cut and removed with a 1.5 cm bonded portion left.

### <Examples 25 to 27>

Pouches were obtained in the same manner as in Example 24 except that the films obtained in Examples 5, 14, and 23 were used.

### <Comparative Examples 25 to 32>

Pouches were obtained in the same manner as in Example 24 except that the films obtained in Comparative Examples 1, 11, 12, and 14 to 18 were used.

### Evaluation of pouch

### <Bottom film state in pouch>

The state of the bottom film during bottom molding was visually evaluated. If the film strength is insufficient, the film is broken at the time of molding the bottom film. A case where the film was not broken was recorded as A, and a case where the film was broken was recorded as B.

### <Air leakage from pouch>

The obtained pouch was left standing under an environment of 23°C and 50% RH for 24 hours, and air leakage from the pouch was evaluated. A case where there was no air leakage was recorded as A, and a case where there was air leakage was recorded as B.

### <Water solubility of pouch>

A water solubility test was conducted using the obtained pouch. The obtained pouch is put into a wire frame cage (10 cm × 9 cm × 6.4 cm, gauge of wire: 1.25 mm, opening: 1.27 cm). Stirring was conducted at 400 rpm using a 5 cm rotor in a 2 liter beaker containing 1200 ml of distilled water. After the temperature of the distilled water in the beaker reached 10°C, the wire frame cage and the pouch were placed at a position where the cage was positioned 1 inch (2.54 cm) from the bottom of the beaker. The dissolution state of the film was visually observed, and whether the film was completely dissolved or not was visually confirmed. A case without residue was recorded as A, and a case with residue was recorded as B.

The results of the evaluations are shown in Table 3.

**[Table 3]**

| | | Film used | State of bottom film | Air leakage from pouch | Water solubility of pouch |
|---|---|---|---|---|---|
| Example | 24 | Example 1 | A | A | A |
| | 25 | Example 5 | A | A | A |
| | 26 | Example 14 | A | A | A |
| | 27 | Example 23 | A | A | A |
| Comparative Example | 25 | Comparative Example 1 | A | A | B |
| | 26 | Comparative Example 11 | B | -*¹ | - |
| | 27 | Comparative Example 12 | B | -*¹ | - |
| | 28 | Comparative Example 14 | A | B*² | - |
| | 29 | Comparative Example 15 | B | -*¹ | - |
| | 30 | Comparative Example 16 | B | -*¹ | - |
| | 31 | Comparative Example 17 | A | B*² | - |
| | 32 | Comparative Example 18 | A | B*² | - |

| | | | | | |
|---|---|---|---|---|---|
| *1: Since the film was broken during molding of the bottom film, a pouch was not obtained. *2: The films stuck with each other, and the pouch shape could not be maintained. | | | | | |

### Preparation of laminate

### <Example 28>

7 g of tamarind seed gum (Glyate (registered trademark)) and 3 g of glycerin was added to pure water were such that the total concentration was 15 mass%, and the mixture was heated and stirred at 90°C for 1 hour to be dissolved, thereby affording a coating liquid (coating agent). The coating liquid obtained was cooled to 25°C and applied to paper (Solide Lucent 78 gsm) as a support using a bar coater such that the thickness of the coating liquid after application (hereinafter, it may be simply referred to as "thickness of a coating liquid") was 133 µm. The wet coating film on the support was dried in a hot air dryer at 80°C for 30 minutes, affording a laminate comprising the support and the coating film.

### <Examples 29 to 42 and Comparative Examples 33 to 36>

Laminates each comprising a support and a coating film were obtained in the same manner as in Example 28 except that the materials and production conditions as described in the following Table 4 were used and employed. When the coating was conducted twice, coating was conducted, on a dry coating film on the support obtained by first coating and drying, in the same manner as in the first coating, and then the resulting wet coating film was dried in a hot air dryer at 80°C for 30 minutes.

### <Thickness of coating film>

The thickness of the coating film was calculated by the following equation. 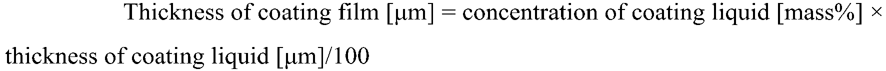 Thickness of coating film [µm] = concentration of coating liquid [mass%] × thickness of coating liquid [µm]/100 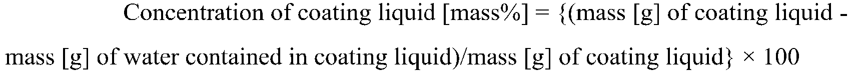 Concentration of coating liquid [mass%] = {(mass [g] of coating liquid - mass [g] of water contained in coating liquid)/mass [g] of coating liquid} × 100

The total thickness of the coating film when the coating was conducted twice was calculated by replacing the "thickness of coating liquid" in the above equation with the "total thickness of coating liquid".

### <Flex resistance>

The laminate was folded with the coating surface facing inward. A 2 kg rubber roller was reciprocated once from one end to the other end of the folded region (crease), and the crease was thereby fixed. Toluene colored with food red was applied over 10 cm of the crease portion on the coated surface side, and then it was confirmed whether or not there was a bleed-through (small red spots or coloring of the entire surface of the coated surface) to the back surface (uncoated surface). When there was no bleed-through, the same operation was repeated again to confirm whether there was no bleed-through. The maximum number of times of folding without such bleed-through was defined as flex resistance [times], and the maximum value was decided to be 5 times. As this value is larger, the coating layer is better in mechanical strength, and cracks are less prone to occur at the time of folding.

### <Oxygen transmission rate (OTR)>

The oxygen transmission rate (cc/m²·day·atm) of a laminate was measured under the following conditions using an oxygen transmission rate analyzer (OXYSENSE MODEL 8101e manufactured by Systech Illinois).
Temperature: 23°C
Humidity on oxygen supply side: 50% RH
Humidity on carrier gas side: 50% RH
Carrier gas flow rate: 10 mL/min
Oxygen pressure: 1.0 atm
Carrier gas pressure: 1.0 atm

The evaluation results are shown in Table 4.

**[Table 4]**

| | | Composition of coating liquid (excluding pure water) | | | | | | Conditions for manufacturing laminate | | | | | Properties of laminate | |
|---|---|---|---|---|---|---|---|---|---|---|---|---|---|---|
| | | Polysaccharide A | | Polysaccharide B | | Plasticizer | | Type of support | Concentration of coating liquid | Thickness of coating liquid | | Dry coating film (total) thickness | Flex resistance | OTR |
| | | | | | | | | | | First application | Second application | | | |
| | | Type | [mass%] | Type | [mass%] | Type | [mass%] | | [mass%] | [µm] | [µm] | [µm] | [times] | [cc/m²·day·atm] |
| | 28 | Tamarind seed gum (Glyate (registered trademark)) | 70 | - | - | Glycerin | 30 | Solide Lucent 78 gsm | 15 | 67 | - | 10 | 5 | 4.8 |
| | 29 | Tamarind seed gum (Glyate (registered trademark)) | 50 | - | - | Glycerin | 50 | Solide Lucent 78 gsm | 15 | 67 | - | 10 | 5 | 9.7 |
| | 30 | Tamarind seed gum (Glyate (registered trademark)) | 30 | - | - | Glycerin | 70 | Solide Lucent 78 gsm | 15 | 67 | - | 10 | 5 | 13.3 |
| | 31 | Tamarind seed gum (Glyate (registered trademark)) | 100 | | | - | - | Solide Lucent 78 gsm | 15 | 67 | | 10 | 1 | - |
| | 32 | Tamarind seed gum (Glyate (registered trademark)) | 90 | - | - | Sorbitol | 10 | Solide Lucent 78 gsm | 15 | 67 | - | 10 | 1 | - |
| | 33 | Tamarind seed gum (Glyate (registered trademark)) | 80 | - | - | Sorbitol | 20 | Solide Lucent 78 gsm | 15 | 67 | - | 10 | 2 | 0.9 |
| Example | 34 | Tamarind seed gum (Glyate (registered trademark)) | 70 | - | - | Sorbitol | 30 | Solide Lucent 78 gsm | 15 | 67 | - | 10 | 4 | 0.02 |
| | 35 | Tamarind seed gum (Glyate (registered trademark)) | 90 | - | - | Trehalose | 10 | Solide Lucent 78 gsm | 15 | 67 | - | 10 | 1 | - |
| | 36 | Tamarind seed gum (Glyate (registered trademark)) | 80 | - | - | Trehalose | 20 | Solide Lucent 78 gsm | 15 | 67 | - | 10 | 1 | - |
| | 37 | Tamarind seed gum (Glyate (registered trademark)) | 70 | - | - | Sorbitol | 30 | Bleached kraft paper 80 gsm | 6 | 333 | - | 20 | 1 | - |
| | 38 | Tamarind seed gum (Glyate (registered trademark)) | 20 | Pectin | 10 | Fructose | 70 | Bleached kraft paper 80 gsm | 20 | 9 | 22 | 8 | 3 | - |
| | 39 | Tamarind seed gum (Glyate (registered trademark)) | 20 | Pectin | 5 | Fructose | 75 | Bleached kraft paper 80 gsm | 25 | 9 | 22 | 8 | 5 | - |
| | 40 | Tamarind seed gum (Glyate (registered trademark)) | 20 | Gum Arabic | 10 | Fructose | 70 | Bleached kraft paper 80 gsm | 25 | 9 | 22 | 8 | 5 | - |
| | 41 | Tamarind seed gum (Glyate (registered trademark)) | 20 | Gum Arabic | 5 | Fructose | 75 | Bleached kraft paper 80 gsm | 25 | 9 | 22 | 8 | 2 | - |
| | 42 | Tamarind seed gum (Glyate (registered trademark)) | 20 | - | - | Fructose | 80 | Bleached kraft paper 80 gsm | 25 | 9 | 22 | 8 | 5 | 3.2 |
| Comparative Example | 33 | Gum Arabic | 70 | - | - | Glycerin | 30 | Solide Lucent 78 gsm | 15 | 67 | - | 10 | 0 | - |
| | 34 | Xanthan gum | 70 | - | - | Glycerin | 30 | Solide Lucent 78 gsm | 1 | 1000 | - | 10 | 0 | - |
| | 35 | Processed starch (CATO 304) | 70 | | | Glycerin | 30 | Solide Lucent 78 gsm | 15 | 67 | - | 10 | 0 | - |
| | 36 | Processed starch (National 208) | 70 | - | - | Glycerin | 30 | Solide Lucent 78 gsm | 15 | 67 | - | 10 | 0 | - |

## Claims

1. A pouch comprising a water-soluble film comprising at least one polysaccharide A selected from the group consisting of tamarind seed gum, locust bean gum, tara gum, and derivatives thereof.

2. The pouch according to claim 1, wherein the polysaccharide A is selected from among tamarind seed gum, and derivatives thereof.

3. The pouch according to claim 1, wherein a content of the polysaccharide A is 5 to 80 mass% based on a mass of the water-soluble film.

4. The pouch according to claim 1, wherein the water-soluble film further comprises a plasticizer.

5. The pouch according to claim 4, wherein the plasticizer is at least one selected from the group consisting of a polyhydric alcohol, a hydroxy acid, a monosaccharide, and a disaccharide.

6. The pouch according to claim 5, wherein the plasticizer is at least one selected from the group consisting of glycerin, diglycerin, sorbitol, alkylene glycol, polyalkylene glycol, trimethylolpropane, erythritol, 2-methyl-1,3-propanediol, lactic acid, glucose, fructose, maltose, and trehalose.

7. The pouch according to claim 6, wherein the plasticizer is at least one selected from the group consisting of glycerin, ethylene glycol, sorbitol, and fructose.

8. The pouch according to claim 4, wherein a content of the plasticizer is 20 to 95 mass% based on a mass of the water-soluble film.

9. The pouch according to claim 1, wherein the water-soluble film further comprises a polysaccharide B different from the polysaccharide A.

10. The pouch according to claim 9, wherein the polysaccharide B is at least one selected from the group consisting of guar gum, locust bean gum, xanthan gum, carrageenan, alginic acid, pullulan, and derivatives thereof.

11. The pouch according to claim 9, wherein a content of the polysaccharide B is 1 to 30 mass% based on a mass of the water-soluble film.

12. The pouch according to claim 1, wherein the water-soluble film has a toughness of 400 or more.

13. The pouch according to claim 1, wherein the pouch dissolves in water at 10°C within 1000 seconds.

14. The pouch according to claim 1, wherein the pouch contains therein at least one selected from the group consisting of a cleaning agent, a softener, and a perfume.

15. A water-soluble film comprising at least one polysaccharide A selected from the group consisting of tamarind seed gum, locust bean gum, tara gum, and derivatives thereof.

16. A water-soluble film comprising at least one polysaccharide A selected from the group consisting of tamarind seed gum, locust bean gum, tara gum, and derivatives thereof and a polysaccharide B different from the polysaccharide A.

17. A water-soluble film to be used for a pouch, the water-soluble film comprising at least one polysaccharide A selected from the group consisting of tamarind seed gum, locust bean gum, tara gum, and derivatives thereof, and a plasticizer, wherein a content of the plasticizer is 45 mass% or less based on a mass of the water-soluble film.

18. The water-soluble film according to any of claims 15 to 17, wherein the water-soluble film is a coating film formed from a coating agent comprising at least one polysaccharide A selected from the group consisting of tamarind seed gum, locust bean gum, tara gum, and derivatives thereof.

19. A laminate comprising the water-soluble film according to any of claims 15 to 17 and a support, wherein the support is paper or a film.

20. A packaging material comprising the water-soluble film according to claim 15.

21. A coating agent comprising at least one polysaccharide A selected from the group consisting of tamarind seed gum, locust bean gum, tara gum, and derivatives thereof.
